# EUROPEAN PATENT SPECIFICATION

(11) **EP 2 915 863 B1**
(45) Date of publication and mention of the grant of the patent: **06.11.2019**
(21) Application number: 12887525.9
(22) Date of filing: 31.10.2012
(51) Int. Cl.: C09K 11/59, C09K 11/87

(54) **SILICATE LUMINESCENT MATERIAL AND PREPARATION METHOD THEREFOR**
LUMINESZENTES SILIKATMATERIAL UND HERSTELLUNGSVERFAHREN DAFÜR
SUBSTANCE LUMINESCENTE À BASE DE SILICE ET SON PROCÉDÉ DE PRÉPARATION

(43) Date of publication of application: 09.09.2015
(73) Proprietor: Ocean's King Lighting Science & Technology Co., Ltd., Shenzhen, Guangdong 518054 (CN); Shenzhen Ocean's King Lighting Engineering Co. Ltd., Guangdong 518054 (CN)
(72) Inventor: ZHOU, Mingjie, Shenzhen Guangdong 518054 (CN); WANG, Rong, Shenzhen Guangdong 518054 (CN)
(74) Representative: Mewburn Ellis LLP
(86) International application number: PCT/CN2012/083880
(87) International publication number: WO 2014/067113

(56) References cited:
- WO-A1-2012/012938
- CN-A- 101 348 714
- CN-A- 102 050 573
- JP-A- 2008 208 325
- US-A- 5 391 320
- XINMIN ZHANG ET AL: "Color tunable and thermally stable luminescence of Tbdoped LiSrCa(SiO)phosphors", MATERIALS RESEARCH BULLETIN, ELSEVIER, KIDLINGTON, GB, vol. 47, no. 8, 5 April 2012 (2012-04-05), pages 2012-2015, XP028511988, ISSN: 0025-5408, DOI: 10.1016/J.MATERRESBULL.2012.04.010 [retrieved on 2012-04-13]

## Description

### FIELD OF THE INVENTION

The present invention relates to luminescent material technology. More particularly, the invention relates to a silicate luminescent material preparation method.

### BACKGROUND OF THE INVENTION

In the 1960s, Ken Shoulder proposed ideas based on field emissive arrays (FEAs) electron beam microelectronic devices, thus, to design and produce panel display and light resource devices by using FEAs has drawn the public's attention. Similar to the working principle of conventional cathode ray tube (CRT), such new field emission display lights and forms images by electron beam bombardment on red, green blue trichromatic fluorescent powder. Field emission display has potential advantages in luminance, visual angle, response time, working temperature range, energy consumption and other aspects.

A key to prepare field emission display of high performances is to prepare luminescent material of excellent performance. Zhang et al. report a Li₄SrCa(SiO₄)₂:xTb³⁺ phosphor in their paper (Color tunable and thermally stable luminescence of Tb³⁺ doped Li₄SrCa(SiO₄)₂ phosphors). WO2012/012938 discloses a luminescent material Ln₂SiO₅:Tb, M. At present, luminescent material provided in field emission display are commonly luminescent material of traditional cathode ray tube and projection television kinescope, such as sulfide series, oxide series and oxysulfide series luminescent material. As for sulfide series and oxysulfide series luminescent material, they have high luminance and electrical conductivity, but, under the large electron beam bombardment, they prone to decompose into elemental sulfur, which can poison the tip of cathode and produce other precipitates covering the luminescent material, so as to reduce the luminescent efficiency of luminescent material, and shorten the life of a field emission display.

Due to defects presence in sulfide and oxysulfide luminescent material, researchers intend to replace the sulfide and oxysulfide series luminescent materials with silicate luminescent material, but traditional silicate luminescent material universally has a problem of low luminescent efficiency.

### SUMMARY OF THE INVENTION

In view of this, the present invention provides a silicate luminescent material preparation method, wherein the silicate luminescent material product has high luminescent efficiency.

A silicate luminescent material, wherein said silicate luminescent material has a general molecular formula of Li₂Ca₁₋ₓSiO₄:Tbₓ,M_{y}, wherein, Tb and M are doped particles that doped in Li₂Ca₁₋ₓSiO₄; M is selected from at least one of Ag, Au, Pt, Pd, and Cu metal nanoparticles, x has a value range of 0<x≤0.2, y is a molar ratio of M to Si and y has a value range of 0<y ≤1 × 10⁻² is disclosed.

In one embodiment, said x has a value range of 0.02≤x≤0.10.

In one embodiment, said y has a value range of 1 × 10⁻⁵≤y≤5×10⁻³.

The silicate luminescent material doped with metal particles effectively overcomes the structure defect of silicate luminescent material, which decreases non radiative transition probability and greatly increases luminescent efficiency of the silicate luminescent material in a same excitation condition without changing a wavelength of emitted light. The silicate luminescent material has good stability, overcomes the defect that sulfide and oxysulfide series luminescent materials are easy to decompose, and can replace the sulfide and oxysulfide series luminescent materials in field emission display.

A method for preparing a silicate luminescent material, comprising:
adding silicon dioxide aerogel into a solution of salt of metal M according to molar ratio of M to Si which defined as y, mixing and stirring uniformly said silicon dioxide aerogel and said solution of salt of metal M at 50°C to 75°C to obtain mixture solution, sonicating said mixture solution, drying the mixture solution obtained from sonicating at 60°C to 150°C, grinding mixture solid obtained from drying uniformly, calcining said mixture solid at 600°C to 1200°C to obtain silicon dioxide aerogel containing M ion, said M is selected from at least one of Ag, Au, Pt, Pd, and Cu metal nanoparticles, y has a value range of 0<y ≤1 × 10⁻²;
weighing source compound of Li, source compound of Ca, source compound of Tb and said silicon dioxide aerogel containing M ion according to molar ratio of Li, Ca, Tb and Si elements at 2:(1-x):x:1, mixing and grinding uniformly to obtain mixture material, x has a value range of 0<x≤0.2; and
calcining said mixture material at 500°C to 1000°C, and reducing said mixture material under reducing atmosphere at 800°C to 1200°C, cooling mixture material obtained from reducing to room temperature, grinding to obtain silicate luminescent material has a general molecular formula of Li₂Ca₁₋ₓSiO₄:Tbₓ,M_{y}, Tb and M are doped particles that doped in Li₂Ca₁₋ₓSiO₄.

In one embodiment of the present invention, a solute in said solution of salt of metal M is at least one of HAuCl₄, H₂PtCl₆, AgNO₃, PdCl₂·2H₂O and Cu(NO₃)₂, and solvent in said solution of salt of metal M is ethanol.

In one embodiment of the present invention, a concentration of solution of salt of metal M is in a range of 5×10⁻⁶ to 1×10⁻² mol/L.

In one embodiment of the present invention, said source compound of Li is one of lithium oxide, lithium carbonate, lithium nitrate, lithium acetate and lithium oxalate, said source compound of Ca is one of calcium oxide, calcium carbonate, calcium nitrate, calcium acetate and calcium oxalate, and said source compound of Tb is one of terbium oxide, terbium carbonate, terbium nitrate, terbium acetate and terbium oxalate.

In one embodiment of the present invention, said reducing atmosphere is CO reducing atmosphere, or H₂ reducing atmosphere, or a mixed reducing atmosphere of a volume ratio of 95% N₂ and a volume ratio of 5%H₂.

In one embodiment of the present invention, said x has a value range of 0.02≤x≤0.10; said y has a value range of 1×10⁻⁵≤y≤5×10⁻³.

The above method for preparing silicate luminescent material, comprising: first adsorb metal ion by using silicon dioxide aerogel to obtain silicon dioxide aerogel containing metal ion, then use source compound of Li, source compound of Ca, source compound of Tb and said silicon dioxide aerogel containing metal ion as raw material, and reduce said metal ion to be metal elementary substance, finally to obtain silicate luminescent material has a general molecular formula of Li₂Ca₁₋ₓSiO₄:Tbₓ,M_{y}. Said preparation methods of silicate luminescent material are of simple process, low cost, no pollution, easy to control, easy to produce in industry, and the silicate luminescent material obtained has high luminescent efficiency and high stability, and also has broad application prospects in field emission display.

### BRIEF DESCRIPTION OF THE DRAWINGS

Fig. 1 is a flow chart of the preparation method for silicate luminescent material of one embodiment.
Fig. 2 is a cathodoluminescence spectrum of silicate luminescent material excited by cathode ray under 3kv acceleration voltage in Example 3, wherein curve 1 is a spectrum of luminescent material of Li₂Ca_{0.90}SiO₄:Tb_{0.10}Ag_{2.5×10-4} which is doped with Ag, curve 2 is a spectrum of luminescent material of Li₂Ca_{0.90}SiO₄:Tb_{0.10} without doping metal.

### DETAILED DESCRIPTION OF ILLUSTRATED EMBODIMENTS

Further description of the silicate luminescent material and preparation method thereof will be illustrated combined with embodiments and drawings.

One embodiment of the present disclosure provides a silicate luminescent material, wherein said silicate luminescent material has a general molecular formula of Li₂Ca₁₋ₓSiO₄:Tbₓ,M_{y}, wherein, Tb and M are nano particles doped in Li₂Ca₁₋ₓSiO₄; M is selected from at least one of Ag, Au, Pt, Pd, and Cu metal nanoparticles, x has a value range of 0<x≤0.2, y is a molar ratio of M to Si and y has a value range of 0<y ≤1×10⁻².

Further, in other embodiment preferably, said x has a value range of 0.02≤x≤0.10, said y has a value range of 1×10⁻⁵≤y≤5×10⁻³.

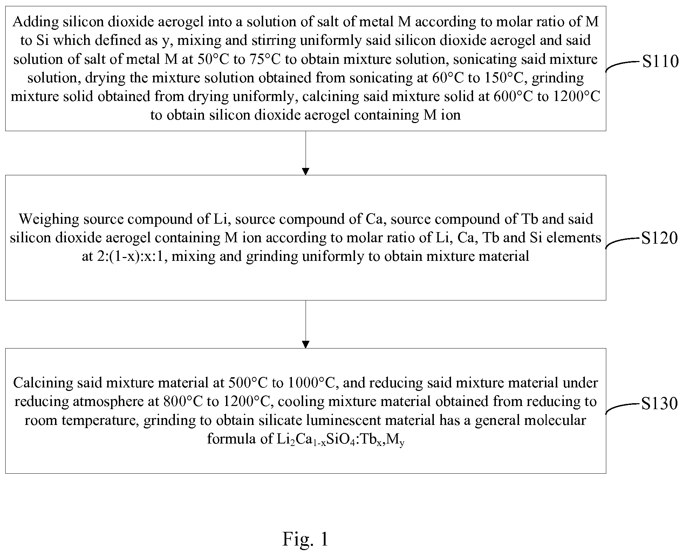

While, one embodiment of the present invention provides a method for preparing a silicate luminescent material, refers to Fig. 1, comprising:
Step S110, adding silicon dioxide aerogel into a solution of salt of metal M according to molar ratio of M to Si which defined as y, mixing and stirring uniformly said silicon dioxide aerogel and said solution of salt of metal M at 50°C to 75°C to obtain mixture solution, sonicating said mixture solution, drying the mixture solution obtained from sonicating at 60°C to 150°C, grinding mixture solid obtained from drying uniformly, calcining said mixture solid at 600°C to 1200°C to obtain silicon dioxide aerogel containing M ion.

Wherein, said M is selected from at least one of Ag, Au, Pt, Pd, and Cu metal nanoparticles, y has a value range of 0<y ≤1×10⁻². A solute in said solution of salt of metal M is at least one of HAuCl₄, H₂PtCl₆, AgNO₃, PdCl₂·2H₂O and Cu(NO₃)₂, and solvent in said solution of salt of metal M is ethanol. In this embodiment of the present invention, a concentration of solution of salt of metal M is in a range of 5×10⁻⁶ to 1×10⁻² mol/L.

Step S120, weighing source compound of Li, source compound of Ca, source compound of Tb and said silicon dioxide aerogel containing M ion according to molar ratio of Li, Ca, Tb and Si elements at 2:(1-x):x:1, mixing and grinding uniformly to obtain mixture material.

Wherein, x has a value range of 0<x≤0.2. Said source compound of Li is one of lithium oxide, lithium carbonate, lithium nitrate, lithium acetate and lithium oxalate. Said source compound of Ca is one of calcium oxide, calcium carbonate, calcium nitrate, calcium acetate and calcium oxalate. Said source compound of Tb is one of terbium oxide, terbium carbonate, terbium nitrate, terbium acetate and terbium oxalate.

Step S130, calcining said mixture material at 500°C to 1000°C, and reducing said mixture material under reducing atmosphere at 800°C to 1200°C, cooling mixture material obtained from reducing to room temperature, grinding to obtain silicate luminescent material has a general molecular formula of Li₂Ca₁₋ₓSiO₄:Tbₓ,M_{y}, wherein, Tb and M are doped particles that doped in Li₂Ca₁₋ₓSiO₄.

In this embodiment of the present invention, said reducing atmosphere is CO reducing atmosphere, or H₂ reducing atmosphere, or a mixed reducing atmosphere of a volume ratio of 95% N₂ and a volume ratio of 5%H₂.

The silicate luminescent material doped with metal particles effectively overcomes the structure defect of silicate luminescent material, which decreases non radiative transition probability and greatly increases luminescent efficiency of the silicate luminescent material in a same excitation condition without changing a wavelength of emitted light. The silicate luminescent material has good stability, overcomes the defect that sulfide and oxysulfide series luminescent materials are easy to decompose, and can replace the sulfide and oxysulfide series luminescent materials in field emission display.

The above method for preparing silicate luminescent material, comprising: first adsorb metal ion by using silicon dioxide aerogel to obtain silicon dioxide aerogel containing metal ion, then use source compound of Li, source compound of Ca, source compound of Tb and said silicon dioxide aerogel containing metal ion as raw material, and reduce said metal ion to be metal elementary substance, finally to obtain silicate luminescent material has a general molecular formula of Li₂Ca₁₋ₓSiO₄:Tbₓ,M_{y}. Said preparation methods of silicate luminescent material are of simple process, low cost, no pollution, easy to control, easy to produce in industry, and the silicate luminescent material obtained has high luminescent efficiency and high stability, and also has broad application prospects in field emission display.

Further description of the silicate luminescent material of different compose, preparation method therefor and performance will be illustrated combined with embodiments.

### Example 1

### Preparing silicate luminescent material of Li₂Ca_{0.85}SiO₄:Tb_{0.15},Au_{1×10-2}

Weighing 0.7212g of SiO₂ aerogel, dissolving it in 12 ml of ethanol solution containing HAuCl₄ where the concentrate of HAuCl₄ is 1×10⁻²mol/L. Stirring the mixture solution of SiO₂ aerogel and ethanol solution containing HAuCl₄ at 75□ for 0.5h, and sonicating the mixture solution for 10 minutes, then drying at 150□. Grinding mixture solid obtained from drying, calcining said mixture solid at 1200°C for 0.5 hours to obtain SiO₂ aerogel containing Au³⁺.

Weighing 0.1195g of Li₂O, 0.1904g of CaO, 0.1121g of Tb₄O₇, and 0.2405g of SiO₂ aerogel containing Au³⁺ to obtain mixture material.

Grinding mixture material uniformly in agate mortar to form mixture material powder, then placing the mixture material powder into corundum crucible, heating the mixture material powder in muffle furnace at 500°C for 15 hours and then calcining the mixture material powder in tube furnace under C reducing atmosphere at 1000°C for 2 hours to reduce Au³⁺ into Au, cooling to room temperature, and grinding to obtain silicate luminescent material containing Au has a molecular formula of Li₂Ca_{0.85}SiO₄:Tb_{0.15},Au_{1×10-2}.

### Example 2

### Preparing silicate luminescent material of Li₂Ca_{0.98}SiO₄:Tb_{0.02},Pt_{5×10-3}

Weighing 0.3606g of SiO₂ aerogel, dissolving it in 6 ml of ethanol solution containing H₂PtCl₆ where the concentrate of H₂PtCl₆ is 5×10⁻³mol/L. Stirring the mixture solution of SiO₂ aerogel and ethanol solution containing H₂PtCl₆ at 50□ for 3h, and sonicating the mixture solution for 10 minutes, then drying at 60□. Grinding mixture solid obtained from drying, calcining said mixture solid at 600°C for 4 hours to obtain SiO₂ aerogel containing Pt⁴⁺.

Weighing 0.2955g of Li₂CO₃, 0.3924g of CaCO₃, 0.0199g of Tb₂(CO₃)₃, and 0.2404g of SiO₂ aerogel containing Pt⁴⁺ to obtain mixture material.

Grinding mixture material uniformly in agate mortar to form mixture material powder, then placing the mixture material powder into corundum crucible, heating the mixture material powder in muffle furnace at 1000°C for 2 hours and then calcining the mixture material powder in tube furnace under CO reducing atmosphere at 1200°C for 0.5 hours to reduce Pt⁴⁺ into Pt, cooling to room temperature, and grinding to obtain silicate luminescent material containing Pt has a molecular formula of Li₂Ca_{0.98}SiO₄:Tb_{0.02},Pt_{5×10-3}.

### Example 3

### Preparing silicate luminescent material of Li₂Ca_{0.90}SiO₄:Tb_{0.10},Ag_{2.5×10-4}

Weighing 0.3606g of SiO₂ aerogel, dissolving it in 7.5 ml of ethanol solution containing AgNO₃ where the concentrate of AgNO₃ is 2×10⁻⁴mol/L. Stirring the mixture solution of SiO₂ aerogel and ethanol solution containing AgNO₃ at 60□ for 2h, and sonicating the mixture solution for 10 minutes, then drying at 80□. Grinding mixture solid obtained from drying, calcining said mixture solid at 800°C for 2 hours to obtain SiO₂ aerogel containing Ag⁺.

Weighing 0.2955g of Li₂CO₃, 0.2016g of CaO, 0.0747g of Tb₄O₇, and 0.2524g of SiO₂ aerogel containing Ag⁺ to obtain mixture material.

Grinding mixture material uniformly in agate mortar to form mixture material powder, then placing the mixture material powder into corundum crucible, heating the mixture material powder in muffle furnace at 600°C for 4 hours and then calcining the mixture material powder in tube furnace under a mixed reducing atmosphere of a volume ratio of 95% N₂ and a volume ratio of 5%H₂ at 1000°C for 4 hours to reduce Ag⁺ into Ag, cooling to room temperature, and grinding to obtain silicate luminescent material containing Ag has a molecular formula of Li₂Ca_{0.90}SiO₄:Tb_{0.10}Ag_{2.5×10-4}.

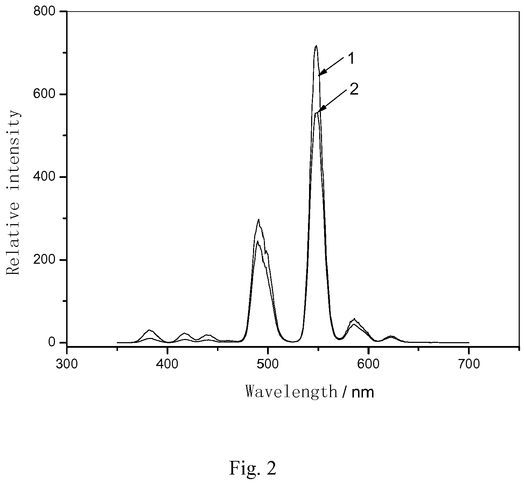

Fig. 2 is a cathodoluminescence spectrum of silicate luminescent material excited by cathode ray under 3kv acceleration voltage in Example 3, wherein curve 1 is a spectrum of luminescent material of Li₂Ca_{0.90}SiO₄:Tb_{0.10},Ag_{2.5×10-4} which is doped with Ag, curve 2 is a spectrum of luminescent material of Li₂Ca_{0.90}SiO₄:Tb_{0.10} without doping metal. As shown from Fig. 2, luminescent intensity of the luminescent material with doping at 544 emission peak is 29% higher than that of luminescent intensity of the luminescent material without doping, said luminescent material in this example has high stable performance, high purity and high luminescent efficiency.

### Example 4

### Preparing silicate luminescent material of Li₂Ca_{0.80}SiO₄:Tb_{0.20},Pd_{1×10-5}

Weighing 0.3005g of SiO₂ aerogel, dissolving it in 10 ml of ethanol solution containing PdCl₂·2H₂O where the concentrate of PdCl₂·2H₂O is 5×10^{- 6}mol/L. Stirring the mixture solution of SiO₂ aerogel and ethanol solution containing PdCl₂·2H₂O at 65 □ for 1.5h, and sonicating the mixture solution for 10 minutes, then drying at 120□. Grinding mixture solid obtained from drying, calcining said mixture solid at 1100°C for 2 hours to obtain SiO₂ aerogel containing Pd⁴⁺.

Weighing 0.4076g of Li₂C₂O₄, 0.4096g of CaC₂O₄, 0.2327g of Tb₂(C₂O₄)₃, and 0.2524g of SiO₂ aerogel containing Pd⁴⁺ to obtain mixture material.

Grinding mixture material uniformly in agate mortar to form mixture material powder, then placing the mixture material powder into corundum crucible, heating the mixture material powder in muffle furnace at 700°C for 5 hours and then calcining the mixture material powder in tube furnace under H₂ reducing atmosphere at 800°C for 6 hours to reduce Pd⁴⁺ into Pd, cooling to room temperature, and grinding to obtain silicate luminescent material containing Pd has a molecular formula of Li₂Ca_{0.80}SiO₄:Tb_{0.20},Pd_{1×10-5}.

### Example 5

### Preparing silicate luminescent material of Li₂Ca_{0.95}SiO₄:Tb_{0.05},Cu_{1×10-4}

Weighing 0.3606g of SiO₂ aerogel, dissolving it in 12 ml of ethanol solution containing Cu(NO₃)₂ where the concentrate of Cu(NO₃)₂ is 5×10⁻⁵mol/L. Stirring the mixture solution of SiO₂ aerogel and ethanol solution containing Cu(NO₃)₂ at 70□ for 1h, and sonicating the mixture solution for 10 minutes, then drying at 70□. Grinding mixture solid obtained from drying, calcining said mixture solid at 800°C for 2 hours to obtain SiO₂ aerogel containing Cu²⁺.

Weighing 0.5516g of LiNO₃, 0.6232g of Ca(NO₃)₂, 0.0689g of Tb(NO₃)₃, and 0.2404g of SiO₂ aerogel containing Cu²⁺ to obtain mixture material.

Grinding mixture material uniformly in agate mortar to form mixture material powder, then placing the mixture material powder into corundum crucible, heating the mixture material powder in muffle furnace at 600°C for 4 hours and then calcining the mixture material powder in tube furnace under a mixed reducing atmosphere of a volume ratio of 95% N₂ and a volume ratio of 5%H₂ at 1000°C for 6 hours to reduce Cu²⁺ into Cu, cooling to room temperature, and grinding to obtain silicate luminescent material containing Cu has a molecular formula of Li₂Ca_{0.95}SiO₄:Tb_{0.05},Cu_{1×10-4}.

### Example 6

### Preparing silicate luminescent material of Li₂Ca_{0.88}SiO₄:Tb_{0.12},Ag_{5×10-4}

Weighing 0.3606g of SiO₂ aerogel, dissolving it in 12 ml of ethanol solution containing AgNO₃ where the concentrate of AgNO₃ is 2.5×10⁻⁴mol/L. Stirring the mixture solution of SiO₂ aerogel and ethanol solution containing AgNO₃ at 65□ for 1.5h, and sonicating the mixture solution for 10 minutes, then drying at 120□. Grinding mixture solid obtained from drying, calcining said mixture solid at 900°C for 3 hours to obtain SiO₂ aerogel containing Ag⁺.

Weighing 0.2955g of Li₂CO₃, 0.4506g of CaC₂O₄, 0.1396g of Tb₂(C₂O₄)₃, and 0.2404g of SiO₂ aerogel containing Ag⁺ to obtain mixture material.

Grinding mixture material uniformly in agate mortar to form mixture material powder, then placing the mixture material powder into corundum crucible, heating the mixture material powder in muffle furnace at 500°C for 10 hours and then calcining the mixture material powder in tube furnace under H₂ reducing atmosphere at 1100°C for 3 hours to reduce Ag⁺ into Ag, cooling to room temperature, and grinding to obtain silicate luminescent material containing Ag has a molecular formula of Li₂Ca_{0.88}SiO₄:Tb_{0.12},Ag_{5×10-4}.

### Example 7

### Preparing silicate luminescent material of Li₂Ca_{0.92}SiO₄:Tb_{0.08},(Ag_{0.5}/Au_{0.5})_{1.25×10-3}

Weighing 0.7212g of SiO₂ aerogel, dissolving it in 15 ml of ethanol solution containing AgNO₃ and HAuCl₄ where the concentrate of AgNO₃ is 1×10^{- 3}mol/L and the concentrate of HAuCl₄ is 1×10⁻³mol/L. Stirring the mixture solution of SiO₂ aerogel and ethanol solution containing AgNO₃ and HAuCl₄ at 60 □ for 2h, and sonicating the mixture solution for 10 minutes, then drying at 80□. Grinding mixture solid obtained from drying, calcining said mixture solid at 1000°C for 4 hours to obtain SiO₂ aerogel containing Ag⁺ and Au³⁺.

Weighing 0.5279g of CH₃COOLi, 0.5821g of (CH₃COO)₂Ca, 0.1075g of (CH₃COO)₃Tb, and 0.2524g of SiO₂ aerogel containing Ag⁺ and Au³⁺ to obtain mixture material.

Grinding mixture material uniformly in agate mortar to form mixture material powder, then placing the mixture material powder into corundum crucible, heating the mixture material powder in muffle furnace at 700°C for 8 hours and then calcining the mixture material powder in tube furnace under a mixed reducing atmosphere of a volume ratio of 95% N₂ and a volume ratio of 5%H₂ at 900°C for 5 hours to reduce Ag⁺ and Au³⁺ into Ag and Au, cooling to room temperature, and grinding to obtain silicate luminescent material containing Ag and Au has a molecular formula of Li₂Ca_{0.92}SiO₄:Tb_{0.08},(Ag_{0.5}/Au_{0.5})_{1.25×10-3}.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the scope of the present invention. Accordingly, the scope of the present invention is described by the appended claims and is supported by the foregoing description.

## Claims

1. A method for preparing a silicate luminescent material, comprising:
adding silicon dioxide aerogel into a solution of salt of metal M according to molar ratio of M to Si which defined as y, mixing and stirring uniformly said silicon dioxide aerogel and said solution of salt of metal M at 50°C to 75°C to obtain mixture solution, sonicating said mixture solution, drying the mixture solution obtained from sonicating at 60°C to 150°C, grinding mixture solid obtained from drying uniformly, calcining said mixture solid at 600°C to 1200°C to obtain silicon dioxide aerogel containing M ion, said M is selected from at least one of Ag, Au, Pt, Pd, and Cu metal nanoparticles, y has a value range of 0<y ≤1×10⁻²;
weighing source compound of Li, source compound of Ca, source compound of Tb and said silicon dioxide aerogel containing M ion according to molar ratio of Li, Ca, Tb and Si elements at 2:(1-x):x:1, mixing and grinding uniformly to obtain mixture material, x has a value range of 0<x≤0.2; and
calcining said mixture material at 500°C to 1000°C, and reducing said mixture material under reducing atmosphere at 800°C to 1200°C, cooling mixture material obtained from reducing to room temperature, grinding to obtain silicate luminescent material has a general molecular formula of Li₂Ca₁₋ₓSiO₄:Tbₓ,M_{y}, of which Tb and M are doped particles that doped in Li₂Ca₁₋ₓSiO₄.

2. The method for preparing said silicate luminescent material as in claim 1, wherein a solute in said solution of salt of metal M is at least one of HAuCl₄, H₂PtCl₆, AgNO₃, PdCl₂·2H₂O and Cu(NO₃)₂, and a solvent in said solution of salt of metal M is ethanol.

3. The method for preparing said silicate luminescent material as in claim 2, wherein a concentration of solution of salt of metal M is in a range of 5×10⁻⁶ to 1×10⁻² mol/L.

4. The method for preparing said silicate luminescent material as in claim 1, wherein said source compound of Li is one of lithium oxide, lithium carbonate, lithium nitrate, lithium acetate and lithium oxalate, said source compound of Ca is one of calcium oxide, calcium carbonate, calcium nitrate, calcium acetate and calcium oxalate, and said source compound of Tb is one of terbium oxide, terbium carbonate, terbium nitrate, terbium acetate and terbium oxalate.

5. The method for preparing said silicate luminescent material as in claim 1, wherein said reducing atmosphere is CO reducing atmosphere, or H₂ reducing atmosphere, or a mixed reducing atmosphere of a volume ratio of 95% N₂ and a volume ratio of 5%H₂.

6. The method for preparing said silicate luminescent material as in claim 1, wherein said x has a value range of 0.02≤x≤0.10; said y has a value range of 1×10^{- 5}≤y≤5×10⁻³.

## Patentansprüche

1. Verfahren zur Herstellung eines lumineszierenden Silikatmaterials, umfassend:
Zusetzen von Siliciumdioxid-Aerogel in eine Lösung eines Salzes von Metall M gemäß einem Molverhältnis von M zu Si, das als y definiert ist, Vermischen und gleichmäßiges Rühren des Siliciumdioxid-Aerogels und der Lösung eines Salzes von Metall M bei 50 bis 75 °C, um ein Lösungsgemisch zu erhalten, Beschallen des Lösungsgemischs, Trocknen des Lösungsgemischs, das durch das Beschallen erhalten wurde, bei 60 bis 150 °C, Mahlen des Feststoffgemischs, das durch gleichmäßiges Trocknen erhalten wurde, Kalzinieren des Feststoffgemischs bei 600 bis 1200 °C, um ein Siliciumdioxid-Aerogel zu erhalten, das ein M-Ion enthält, wobei M aus zumindest einem von Ag-, Au-, Pt-, Pd- und Cu-Metallnanopartikeln ausgewählt ist und y einen Wertebereich von 0<y≤1x10⁻² aufweist;
Abwiegen der Ausgangsverbindung von Li, Ausgangsverbindung von Ca, Ausgangsverbindung von Tb und des Siliciumdioxid-Aerogels, das ein M-Ion enthält, gemäß einem Molverhältnis von Li-, Ca-, Tb- und Si-Elementen von 2:(1-x):x:1, Vermischen und gleichmäßiges Mahlen, um ein Materialgemisch zu erhalten, wobei x einen Wertebereich von 0<x≤0,2 aufweist; und
Kalzinieren des Materialgemischs bei 500 bis 1000 °C und Reduzieren des Materialgemischs unter reduzierender Atmosphäre bei 800 bis 1200 °C, Abkühlen des aus dem Reduzieren erhaltenen Materialgemischs auf Raumtemperatur, Mahlen, um ein lumineszierendes Silikatmaterial zu erhalten, das eine allgemeine Molekularformel von Li₂Ca₁₋ₓSiO₄:Tbₓ,M_{y} aufweist, worin Tb und M dotierte Teilchen sind, die in Li₂Ca₁₋ₓSiO₄ dotiert sind.

2. Verfahren zur Herstellung eines lumineszierenden Silikatmaterials nach Anspruch 1, wobei ein Gelöststoff der Lösung eines Salzes von Metall M zumindest eines aus HAuCl₄, H₂PtCl₆, AgNO₃, PdCl₂·2H₂O und Cu(NO₃)₂ ist und ein Lösungsmittel in der Lösung eines Salzes von Metall M Ethanol ist.

3. Verfahren zur Herstellung eines lumineszierenden Silikatmaterials nach Anspruch 2, wobei eine Konzentration der Lösung eines Salzes von Metall M in einem Bereich von 5x10⁻⁶ bis 1x10⁻² mol/l liegt.

4. Verfahren zur Herstellung eines lumineszierenden Silikatmaterials nach Anspruch 1, wobei die Ausgangsverbindung von Li eines aus Lithiumoxid, Lithiumcarbonat, Lithiumnitrat, Lithiumacetat und Lithiumoxalat ist, die Ausgangsverbindung von Ca eines aus Calciumoxid, Calciumcarbonat, Calciumnitrat, Calciumacetat und Calciumoxalat ist und die Ausgangsverbindung von Tb eines aus Terbiumoxid, Terbiumcarbonat, Terbiumnitrat, Terbiumacetat und Terbiumoxalat ist.

5. Verfahren zur Herstellung eines lumineszierenden Silikatmaterials nach Anspruch 1, wobei die reduzierende Atmosphäre reduzierende CO-Atmosphäre oder reduzierende H₂-Atmosphäre oder ein gemischte reduzierende Atmosphäre mit einem Volumsanteil von 95 % N₂ und einem Volumanteil von 5 % H₂ ist.

6. Verfahren zur Herstellung eines lumineszierenden Silikatmaterials nach Anspruch 1, wobei x einen Wertebereich von 0,02≤x≤0,10 aufweist; y einen Wertebereich von 1x10⁻⁵≤y≤5x10⁻¹ aufweist.

## Revendications

1. Procédé de préparation d'un matériau luminescent à base de silicate, comprenant :
l'ajout d'aérogel à base de dioxyde de silicium dans une solution de sel de métal M selon un rapport molaire de M à Si qui est défini comme étant y, le mélange et l'agitation uniforme dudit aérogel à base de dioxyde de silicium et de ladite solution de sel de métal M à 50 °C à 75 °C pour obtenir une solution de mélange, le traitement par ultrasons de ladite solution de mélange, le séchage de la solution de mélange obtenue à partir du traitement par ultrasons à 60 °C à 150 °C, le broyage du solide de mélange obtenu à partir du séchage uniforme, la calcination dudit solide de mélange à 600 °C à 1 200 °C pour obtenir un aérogel à base de dioxyde de silicium contenant l'ion M, ledit M est choisi parmi au moins l'une des nanoparticules métalliques Ag, Au, Pt, Pd et Cu, y a une plage de valeurs de 0 < y ≤ 1×10⁻² ;
la pesée du composé source de Li, du composé source de Ca, du composé source de Tb et dudit aérogel à base de dioxyde de silicium contenant l'ion M selon un rapport molaire des éléments Li, Ca, Tb et Si à 2:(1-x):x:1, le mélange et le broyage uniforme pour obtenir un matériau de mélange, x a une plage de valeurs de 0 < x ≤ 0,2 ; et
la calcination dudit matériau de mélange à 500 °C à 1 000 °C, et la réduction dudit matériau de mélange sous une atmosphère réductrice à 800 °C à 1 200 °C, le refroidissement du matériau de mélange obtenu à partir de la réduction à température ambiante, le broyage pour obtenir le matériau luminescent à base de silicate a une formule moléculaire générale de Li₂Ca₁₋ₓSiO₄:Tbₓ,M_{y}, où Tb et M sont des particules dopées qui sont dopées dans Li₂Ca₁₋ₓSiO₄.

2. Procédé de préparation dudit matériau luminescent à base de silicate selon la revendication 1, dans lequel un soluté dans ladite solution de sel de métal M est au moins l'un de HAuCl₄, H₂PtCl₆, AgNO₃, PdCl₂·2H₂O et Cu(NO₃)₂, et un solvant dans ladite solution de sel de métal M est l'éthanol.

3. Procédé de préparation dudit matériau luminescent à base de silicate selon la revendication 2, dans lequel une concentration de solution de sel de métal M est dans une plage de 5×10⁻⁶ à 1×10⁻² mol/l.

4. Procédé de préparation dudit matériau luminescent à base de silicate selon la revendication 1, dans lequel ledit composé source de Li est l'un de l'oxyde de lithium, du carbonate de lithium, du nitrate de lithium, de l'acétate de lithium et de l'oxalate de lithium, ledit composé source de Ca est l'un de l'oxyde de calcium, du carbonate de calcium, du nitrate de calcium, de l'acétate de calcium et de l'oxalate de calcium, et ledit composé source de Tb est l'un de l'oxyde de terbium, du carbonate de terbium, du nitrate de terbium, de l'acétate de terbium et de l'oxalate de terbium.

5. Procédé de préparation dudit matériau luminescent à base de silicate selon la revendication 1, dans lequel ladite atmosphère réductrice est une atmosphère réductrice de CO, ou une atmosphère réductrice de H₂, ou une atmosphère réductrice mixte d'un rapport volumique de 95 % de N₂ et d'un rapport volumique de 5 % de H₂.

6. Procédé de préparation dudit matériau luminescent à base de silicate selon la revendication 1, dans lequel ledit x a une plage de valeurs de 0,02 ≤ x ≤ 0,10 ; ledit y a une plage de valeurs de 1×10⁻⁵ ≤ y ≤ 5×10⁻³.
